(19) Europäisches Patentamt
European Patent Office
Office européen des brevets

(11) **EP 4 786 032 A1**

(12) **EUROPEAN PATENT APPLICATION**
published in accordance with Art. 153(4) EPC

(43) Date of publication:
05.08.2026 Bulletin 2026/32

(21) Application number: 24872409.8

(22) Date of filing: 26.09.2024

(51) International Patent Classification (IPC):
*B01D 61/02* (2006.01)    *B01D 61/08* (2006.01)
*B01D 61/14* (2006.01)    *B01D 61/58* (2006.01)
*B01D 69/02* (2006.01)    *B01D 71/56* (2006.01)
*C01D 15/02* (2006.01)    *C02F 1/42* (2023.01)
*C02F 1/44* (2023.01)    *C22B 3/22* (2006.01)

(52) Cooperative Patent Classification (CPC):
B01D 61/02; B01D 61/08; B01D 61/14;
B01D 61/58; B01D 69/02; B01D 71/56;
C01D 15/02; C02F 1/42; C02F 1/44; C22B 3/22

(86) International application number:
PCT/JP2024/034460

(87) International publication number:
WO 2025/070624 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.09.2023 JP 2023169364

(71) Applicant: **Toray Industries, Inc.**
**Tokyo 103-8666 (JP)**

(72) Inventors:
• **MIYAMOTO, Ryoma**
**Otsu-shi, Shiga 520-8558 (JP)**
• **WATANABE, Tomoki**
**Otsu-shi, Shiga 520-8558 (JP)**
• **AOYAMA, Shigeru**
**Otsu-shi, Shiga 520-8558 (JP)**
• **YOSHIZAKI, Tomoya**
**Otsu-shi, Shiga 520-8558 (JP)**
• **TOKUDA, Takuto**
**Otsu-shi, Shiga 520-8558 (JP)**

(74) Representative: **Kador & Partner Part mbB**
**Corneliusstraße 15**
**80469 München (DE)**

(54) **METHOD AND DEVICE FOR RECOVERING ALKALI METAL IONS AND HYDROXIDE IONS**

(57) The present invention relates to a method for recovering alkali metal ions and hydroxide ions from water being treated, the method including a nanofiltration step in which water being treated is separated using a nanofiltration membrane, the water being treated containing alkali metal ions and polyvalent ions, having a pH of 10 or higher, and having a hydroxide ion concentration (mol/L) lower than the sum of alkali metal ion concentrations (mol/L), the nanofiltration membrane being such that the difference between the glucose removal rate and the isopropyl alcohol removal rate is 40% or greater, the glucose removal rate being 70% or higher, and the magnesium sulfate removal rate being 95% or higher.

*FIG. 1*

## Description

TECHNICAL FIELD

The present invention relates to a method and an apparatus for recovering alkali metal ions and hydroxide ions.

BACKGROUND ART

In recent years, with the industrial and economic development of the world, the demand for mineral resources has been greatly increased. Among mineral resources that are industrially indispensable in a wide range of fields, including the semiconductor industry, there are many resources which, although the reserves in the earth crust are large, are technically difficult to extract as individual elements and are economically unprofitable due to a high mining and refining cost, or which are localized in specific regions.

On the other hand, environmental problems have also been brought into sharp focus, and there is a desire to build a recycling-oriented society. In particular, from the viewpoint of reducing carbon dioxide emissions, the development of electric vehicles, and motors and batteries used therein has been accelerated. In particular, as for the batteries, a lithium ion secondary battery is expected as a main battery for electric vehicles because of an energy density and a light weight thereof.

Among them, as a positive electrode material for a lithium ion secondary battery, there is an increasing demand for a high nickel (NMC811)-based positive electrode material having an energy density higher than that of NMC622 and NMC531 in the related art.

A precursor in preparing the positive electrode material is nickel sulfate as a nickel source, cobalt sulfate as a cobalt source, and manganese sulfate as a manganese source. As a lithium source, lithium carbonate is required in the positive electrode material in the related art (NMC622, NMC531, or the like), whereas lithium hydroxide is required in the high nickel-based positive electrode material, and thus the demand for lithium hydroxide is increasing.

Non-Patent Literature 1 mainly describes purification from brackish water, purification from ores, and electrolysis of lithium sulfate as a method for producing lithium hydroxide.

As a purification method from brackish water, there is a method in which slaked lime is added to a slurry of lithium carbonate purified from brackish water and heated to convert lithium carbonate into lithium hydroxide, and calcium carbonate is precipitated and removed for purification.

As a purification method from ores, there is a method in which a concentrate is subjected to calcination, sulfuric acid roasting, and water leaching to remove impurities such as Si and Al to obtain a lithium sulfate solution, then slaked lime is added to remove impurities such as Fe, then slaked lime and sodium hydroxide are further added to remove crystals of sodium sulfate, and then lithium hydroxide is crystallized and purified.

In the above method, lithium is partially removed at the same time as precipitation and removal of impurities, and there is a problem in a recovery rate for lithium.

In addition, in the electrolysis of lithium sulfate, a decrease in efficiency due to clogging of an ion exchange membrane and a load on equipment by the chlorine gas that is generated are problematic.

Examples of a method for purifying lithium hydroxide without performing impurity removal by a precipitation method and without electrolysis include membrane separation and purification of lithium hydroxide using an ion exchange resin or a chelate resin.

As the method of using the ion exchange resin or the chelate resin, a method of purifying lithium hydroxide by removing multivalent anions such as sulfate ions and carbonate ions in the solution using an OH-type strongly basic ion exchange resin and removing multivalent cations such as aluminum ions using the chelate resin is conceivable.

As the method using membrane separation, for example, Patent Literature 1 discloses that a nanofiltration membrane is used to further purify a lithium hydroxide solution after electrolysis.

CITATION LIST

PATENT LITERATURE

Patent Literature 1: JP2001-508925A

NON-PATENT LITERATURE

Non Patent Literature 1: Okubo, "Outline of lithium production technology - current and future trends", Metal Resource Report ISSN 2432-3128, Japan Organization for Metals and Energy Security, 19-03-vol. 48 (2019)

## SUMMARY OF INVENTION

### TECHNICAL PROBLEM

However, in the case of purifying lithium hydroxide using the chelate resin, multivalent cations cannot be adsorbed under conditions of a pH of 10 or more since the chelate resin is generally used in a range of a pH of 3 or more and 10 or less. In order to remove multivalent cations, it is conceivable to use a strongly acidic cation exchange resin or a weakly acidic ion exchange resin instead of the chelate resin, but these resins have lower selectivity for adsorption of multivalent cations and lithium ions than the chelate resin, and the recovery rate for lithium ions decreases.

Patent Literature 1 discloses that, from a lithium hydroxide solution obtained by electrolysis, lithium hydroxide can be selectively separated from multivalent ions by using a nanofiltration membrane, but does not describe a method of recovering high purity lithium hydroxide at a high recovery rate from a solution containing multivalent ions and lithium by using the nanofiltration membrane. That is, a method of recovering alkali metal ions and hydroxide ions from alkaline water to be treated containing multivalent ions and alkali metal with high purity and high efficiency using membrane separation is desired.

Therefore, an object of the present invention is to provide a method for recovering alkali metal ions and hydroxide ions from water to be treated containing alkali metal ions and multivalent ions and having a pH of 10 or more, with high purity and high efficiency using membrane separation.

### SOLUTION TO PROBLEM

In order to achieve the above object, the present invention has the following configurations.

[1] A method for recovering alkali metal ions and hydroxide ions from water to be treated, in which the method includes a nanofiltration step of separating water to be treated using a nanofiltration membrane,

the water to be treated contains alkali metal ions and multivalent ions, has a pH of 10 or more, and has a hydroxide ion concentration (mol/L) lower than the sum of concentrations of the alkali metal ions (mol/L), and
the nanofiltration membrane is such that a difference is 40% or more between a glucose removal rate when a 1,000 mg/L glucose aqueous solution having a temperature of 25°C and a pH of 6.5 is passed through the nanofiltration membrane at an operating pressure of 0.5 MPa and an isopropyl alcohol removal rate when a 1,000 mg/L isopropyl alcohol aqueous solution having a temperature of 25°C and a pH of 6.5 is passed through the nanofiltration membrane at an operating pressure of 0.5 MPa, the glucose removal rate is 70% or more, and a magnesium sulfate removal rate is 95% or more when a 2,000 mg/L magnesium sulfate aqueous solution having a temperature of 25°C and a pH of 6.5 is passed through the nanofiltration membrane at an operating pressure of 0.5 MPa.

[2] The recovery method according to [1], in which in the water to be treated, the sum of concentrations (mol/L) of alkali metal ions other than sodium ions and potassium ions is at least 1 time a chloride ion concentration (mol/L), and the sum of the concentrations (mol/L) of the alkali metals other than sodium ions and potassium ions is at least 1 time the sum of a sodium ion concentration (mol/L) and a potassium ion concentration (mol/L).

[3] The recovery method according to [1] or [2], further including:

a circulation step of mixing a concentrate obtained in the nanofiltration step with the water to be treated; and
a step of controlling the pH of the water to be treated to 10 or more.

[4] The recovery method according to [3], in which the step of controlling the pH of the water to be treated to 10 or more includes adding a hydroxide of a multivalent cation or an organic base to the water to be treated.

[5] The recovery method according to [4], in which the hydroxide of a multivalent cation is calcium hydroxide.

[6] The recovery method according to [3], further including a step of adding dilution water to the water to be treated, in which the dilution water is an aqueous solution having a pH of 10 or more and containing a hydroxide of a multivalent cation or an organic base.

[7] The recovery method according to any one of [3] to [6], further including a step of passing the concentrate through an ultrafiltration membrane.

[8] The recovery method according to any one of [3] to [7], further including a step of bringing at least one of the water to be treated and the concentrate into contact with an anion exchange resin and mixing the at least one with the water to be treated.

[9] The recovery method according to any one of [1] to [8], in which the nanofiltration membrane is such that a difference is 20% or less between the magnesium sulfate removal rate and a magnesium chloride removal rate when a 2,000 mg/L magnesium chloride aqueous solution having a temperature of 25°C and a pH of 6.5 is passed through the nanofiltration membrane at an operating pressure of 0.5 MPa, and the glucose removal rate is 70% or more and 90% or less.

[10] The recovery method according to any one of [1] to [9], in which the alkali metal ions include at least one selected from the group consisting of lithium ions, rubidium ions, cesium ions, and francium ions.

[11] An alkali metal hydroxide, which is recovered from a solution containing alkali metal ions and hydroxide ions recovered by the recovery method according to any one of [1] to [10].

[12] A positive electrode material for a lithium ion battery, in which the positive electrode material is synthesized using the alkali metal hydroxide according to [11], and the alkali metal hydroxide is lithium hydroxide.

[13] An apparatus for recovering alkali metal ions and hydroxide ions from water to be treated,

in which the apparatus includes a nanofiltration unit configured to separate water to be treated using a nanofiltration membrane,
the water to be treated contains alkali metal ions and multivalent ions, has a pH of 10 or more, and has a hydroxide ion concentration (mol/L) lower than the sum of concentrations (mol/L) of the alkali metal ions, and
the nanofiltration membrane is such that a difference is 40% or more between a glucose removal rate when a 1,000 mg/L glucose aqueous solution having a temperature of 25°C and a pH of 6.5 is passed through the nanofiltration membrane at an operating pressure of 0.5 MPa and an isopropyl alcohol removal rate when a 1,000 mg/L isopropyl alcohol aqueous solution having a temperature of 25°C and a pH of 6.5 is passed through the nanofiltration membrane at an operating pressure of 0.5 MPa, the glucose removal rate is 70% or more, and a magnesium sulfate removal rate is 95% or more when a 2,000 mg/L magnesium sulfate aqueous solution having a temperature of 25°C and a pH of 6.5 is passed through the nanofiltration membrane at an operating pressure of 0.5 MPa.

[14] The recovery apparatus according to [13], further including:

a circulation unit configured to mix a concentrate obtained by the nanofiltration unit with the water to be treated; and
a unit configured to pass the concentrate through an ultrafiltration membrane.

[15] The recovery apparatus according to [13] or [14], further including a unit configured to bring at least one of the water to be treated and the concentrate obtained by the nanofiltration unit into contact with an anion exchange resin and mix the at least one with the water to be treated.

ADVANTAGEOUS EFFECTS OF INVENTION

With the recovery method according to the present invention, it is possible to recover alkali metal ions and hydroxide ions with high purity and high efficiency from water to be treated containing alkali metal ions and multivalent ions and having a pH of 10 or more.

BRIEF DESCRIPTION OF DRAWINGS

[FIG. 1] FIG. 1 is a schematic flowchart showing a recovery method according to one embodiment of the present invention.
[FIG. 2] FIG. 2 is a schematic flowchart showing a recovery method according to another embodiment of the present invention.

DESCRIPTION OF EMBODIMENTS

Hereinafter, embodiments of the present invention are described in detail, but the present invention is not limited to the following embodiments and can be freely modified and implemented without departing from the gist of the present invention.

(1) Method for Recovering Alkali Metal Ion and Hydroxide Ion

A recovery method according to the present invention includes a nanofiltration step of separating water to be treated using a nanofiltration membrane to be described later, in which the water to be treated contains alkali metal ions and multivalent ions, has a pH of 10 or more, and has a hydroxide ion concentration (mol/L) lower than the sum of concentrations (mol/L) of the alkali metal ions.

The water to be treated contains at least an alkali metal ion and one or more multivalent ions. Accordingly, the recovery method according to the present invention can be suitably used as a method for recovering alkali metal ions and hydroxide ions from water to be treated. Since the permeate obtained by the recovery method according to the present invention contains alkali metal ions and hydroxide ions, the permeate is also suitably used for a method for recovering an alkali metal hydroxide such as lithium hydroxide, rubidium hydroxide, cesium hydroxide, and francium hydroxide.

Examples of the alkali metal ions include lithium ions, sodium ions, potassium ions, rubidium ions, cesium ions, and francium ions. Among them, from the viewpoint of a value of a recovery target, the water to be treated preferably contains at least one selected from the group consisting of lithium ions, rubidium ions, cesium ions, and francium ions, and more preferably contains lithium ions.

The "multivalent ion" means an ion having a valence of 2 or more in terms of an absolute value in a solution state, and can be classified into, for example, a multivalent anion having a negative charge and a multivalent cation having a positive charge. In the present invention, which is intended to recover alkali metal ions and hydroxide ions with high purity, multivalent ions are impurities.

Examples of multivalent anions include sulfate ions, carbonate ions, and phosphate ions, and examples of multivalent cations include cobalt ions, nickel ions, manganese ions, aluminum ions, manganese ions, iron ions, copper ions, and zinc ions.

In the recovery method according to the present invention, the water to be treated preferably has a higher hydroxide ion concentration (mol/L), and is required to have a pH of 10 or more from the viewpoint to be described later. At the same time, the hydroxide ion concentration is required to be lower than the sum of the concentrations of the alkali metal ions (mol/L). As a result of intensive studies, the present inventors have found that, in the nanofiltration step, the ion permeates the membrane while an electrical neutral condition is satisfied, and therefore, when the hydroxide ion concentration is lower than the alkali metal ion concentrations, it is possible to prevent multivalent ions, which is the impurity in the water to be treated, from permeating the membrane, while allowing hydroxide ions to permeate the membrane.

The hydroxide ion concentration (mol/L) is preferably 1/2 or less, and more preferably 1/5 or less with respect to the sum of the concentrations of the alkali metal ions (mol/L) .

In the case where the water to be treated contains lithium ions as the alkali metal ions, a lithium ion concentration in the water to be treated is preferably 0.5 mg/L or more and 10,000 mg/L or less. When the lithium ion concentration in the water to be treated is 0.5 mg/L or more, recovery efficiency for lithium ions by membrane separation is improved. When the lithium ion concentration in the water to be treated is 10,000 mg/L or less, an increase in osmotic pressure difference is prevented, and membrane separation efficiency is improved. The lithium ion concentration in the water to be treated is more preferably 10 mg/L or more and 8,000 mg/L or less, and still more preferably 100 mg/L or more and 6,000 mg/L or less.

In the case where the water to be treated contains lithium ions as the alkali metal ions, the lithium ion concentration in the water to be treated is preferably $7.2 \times 10^{-5}$ mol/L or more and 1.5 mol/L or less. When the lithium ion concentration in the water to be treated is $7.2 \times 10^{-5}$ mol/L or more, the recovery efficiency for lithium ions by the membrane separation is improved. When the lithium ion concentration in the water to be treated is 1.5 mol/L or less, the increase in osmotic pressure difference is prevented, and the membrane separation efficiency is improved. The lithium ion concentration in the water to be treated is more preferably $1.4 \times 10^{-3}$ mol/L or more and 1.2 mol/L or less, and still more preferably 0.014 mol/L or more and 0.86 mol/L or less.

The sum of the concentrations of the alkali metal ions in the water to be treated is preferably $2 \times 10^{-5}$ mol/L or more and 3.0 mol/L or less. When the sum of the concentrations of the alkali metal ions in the water to be treated is $2 \times 10^{-5}$ mol/L or more, the recovery efficiency for alkali metal ions by the membrane separation is improved. When the sum of the concentrations of the alkali metal ions in the water to be treated is 3.0 mol/L or less, the increase in osmotic pressure difference is prevented, and the membrane separation efficiency is improved. The sum is more preferably $1.4 \times 10^{-3}$ mol/L or more and 2.4 mol/L or less, and still more preferably 0.014 mol/L or more and 1.7 mol/L or less.

The hydroxide ion concentration in the water to be treated is preferably $1.0 \times 10^{-4}$ mol/L or more and 1.0 mol/L or less. When the hydroxide ion concentration in the water to be treated is $1.0 \times 10^{-4}$ mol/L or more, an amount of alkali metal ions that can be recovered in the permeate in the nanofiltration step increases. When the hydroxide ion concentration in the water to be treated is 1.0 mol/L or less, deterioration of the nanofiltration membrane is prevented, and a period during which filtration can be continued is prolonged. The hydroxide ion concentration in the water to be treated is more preferably $1.0 \times 10^{-3}$ mol/L or more and $1.0 \times 10^{-1}$ mol/L or less, and still more preferably $1.0 \times 10^{-2}$ mol/L or more and $1.0 \times 10^{-1}$ mol/L or

less.

In the recovery method according to the present invention, the pH of the water to be treated is 10 or more. When the pH is 10 or more, the hydroxide ion concentration as the recovery target in the water to be treated is sufficiently high, and the amount of alkali metal ions that can be recovered in the permeate in the nanofiltration step increases. From the above viewpoint, the pH of the water to be treated is preferably 11 or more, and more preferably 12 or more.

On the other hand, the pH of the water to be treated is preferably 14 or less. When the pH of the water to be treated is 14 or less, the deterioration of the nanofiltration membrane is prevented, and the period during which filtration can be continued is prolonged. The pH of the water to be treated is more preferably maintained at 10 or more, and still more preferably maintained at 10 or more and 14 or less through the nanofiltration step.

In the water to be treated, in the case where the alkali metal ions as the recovery target are alkali metal ions other than sodium ions and potassium ions, the concentration of monovalent ions other than hydroxide ions, particularly chloride ions, and/or sodium ions and potassium ions, is preferably lower than the concentration of the alkali metal ions other than sodium ions and potassium ions as the recovery target. Specifically, the concentration of the alkali metal ions other sodium ions and potassium ions (mol/L) in the water to be treated is preferably at least 1 time, and more preferably 10 times or more a chloride ion concentration (mol/L). The concentration of the alkali metal ions other sodium ions and potassium ions (mol/L) in the water to be treated is preferably at least 1 time, and more preferably 10 times or more the sum of a sodium ion concentration (mol/L) and a potassium ion concentration (mol/L). When the concentration of the alkali metal ions other than sodium ions and potassium ions as the recovery target, the chloride ion concentration, the sodium ion concentration, and the potassium ion concentration in the water to be treated satisfy the above relationships, the alkali metal ions other than sodium ions and potassium ions and the hydroxide ions as the recovery targets can be efficiently allowed to permeate in the nanofiltration step. Further, the concentration of the alkali metal ions other than sodium ions and potassium ions (mol/L) in the water to be treated is particularly preferably at least 1 time with respect to both the chloride ion concentration (mol/L) and the sum of the sodium ion concentration (mol/L) and the potassium ion concentration (mol/L).

(2) Nanofiltration Step

In the present invention, the water to be treated is treated using the nanofiltration membrane in the nanofiltration step to separate the alkali metal ion and the hydroxide ion on a permeation side and recover the same.

(2-1) Nanofiltration Membrane

The nanofiltration membrane for use in the present invention has a fractionation characteristic positioned between a reverse osmosis membrane and an ultrafiltration membrane. A membrane generally known as a reverse osmosis membrane can remove most of organic substances and ions. On the other hand, the ultrafiltration membrane generally removes high molecular weight organic substances without removing most of the ion species.

In the recovery method according to the present invention, in order to selectively permeate alkali metal ions and remove multivalent ions, the nanofiltration step is performed using a nanofiltration membrane satisfying conditions that a difference between a glucose removal rate when a 1,000 mg/L glucose aqueous solution having a temperature of 25°C and a pH of 6.5 is passed through the nanofiltration membrane at an operating pressure of 0.5 MPa and an isopropyl alcohol removal rate when a 1,000 mg/L isopropyl alcohol aqueous solution having a temperature of 25°C and a pH of 6.5 is passed through the nanofiltration membrane at an operating pressure of 0.5 MPa is 40% or more, the glucose removal rate is 70% or more, and a magnesium sulfate removal rate when a 2,000 mg/L magnesium sulfate aqueous solution having a temperature of 25°C and a pH of 6.5 is passed through the nanofiltration membrane at an operating pressure of 0.5 MPa is 95% or more. Hereinafter, in the present application, when the term "glucose removal rate" is used alone, it means a glucose removal rate when permeating a 1,000 mg/L glucose aqueous solution having a temperature of 25°C and a pH of 6.5 at an operating pressure of 0.5 MPa, when the term "isopropyl alcohol removal rate" is used alone, it means an isopropyl alcohol removal rate when permeating a 1,000 mg/L isopropyl alcohol aqueous solution having a temperature of 25°C and a pH of 6.5 at an operating pressure of 0.5 MPa, and when the term "magnesium sulfate removal rate" is used alone, it means a magnesium sulfate removal rate when permeating a 2,000 mg/L magnesium sulfate aqueous solution having a temperature of 25°C and a pH of 6.5 at an operating pressure of 0.5 MPa.

When the glucose removal rate of the nanofiltration membrane is 70% or more, selective separation and recovery of alkali metal ions and multivalent ions can be operated with high efficiency for a long period of time, and a highly efficient process can be achieved. The glucose removal rate of the nanofiltration membrane is preferably 80% or more. On the other hand, the glucose removal rate is preferably 90% or less. When the glucose removal rate is 90% or less, alkali metal ion permeability can be improved. The glucose removal rate is preferably, for example, 70% or more and 90% or less.

For example, in the nanofiltration membrane, when a polyamide constituting a separation functional layer to be described later contains a substituted piperazine to be described later, a pore diameter of the separation functional layer is uniformly expanded by a substituent of the substituted piperazine, and a high magnesium sulfate removal rate can be maintained while the glucose removal rate is set to 90% or less.

In addition, when the difference between the glucose removal rate and the isopropyl alcohol removal rate is 40% or more, selective separability between multivalent ions and alkali metal ions can be improved. The difference between the glucose removal rate and the isopropyl alcohol removal rate is preferably 45% or more, and more preferably 50% or more. The difference between the glucose removal rate and the isopropyl alcohol removal rate means the value of an expression represented by {(glucose removal rate) - (isopropyl alcohol removal rate)}.

The isopropyl alcohol removal rate of the nanofiltration membrane is preferably 5% or more and 60% or less. From the viewpoint of removability of multivalent ions, the isopropyl alcohol removal rate is preferably 5% or more, and more preferably 10% or more. From the viewpoint of the alkali metal ion permeability, the isopropyl alcohol removal rate is preferably 60% or less, and more preferably 50% or less.

When the magnesium sulfate removal rate of the nanofiltration membrane is 95% or more, the permeation of multivalent ions can be efficiently prevented. From the viewpoint of more efficiently preventing the permeation of multivalent ions, the magnesium sulfate removal rate is preferably 99.0% or more, and more preferably 99.2% or more. On the other hand, from the viewpoint of efficiently allow alkali metal ions to permeate, the magnesium sulfate removal rate is preferably 99.99% or less, and more preferably 99.90% or less.

In the nanofiltration membrane, a difference between the magnesium sulfate removal rate and a magnesium chloride removal rate when a 2,000 mg/L magnesium chloride aqueous solution having a temperature of 25°C and a pH of 6.5 is passed through the nanofiltration membrane at an operating pressure of 0.5 MPa is preferably 20% or less. The difference between the magnesium sulfate removal rate and the magnesium chloride removal rate means a value of an equation represented by {(magnesium sulfate removal rate) - (magnesium chloride removal rate)}. In general, a membrane surface of the separation functional layer of the nanofiltration membrane is negatively charged, but when the difference between the magnesium sulfate removal rate and the magnesium chloride removal rate is 20% or less, the membrane surface charge is closer to neutral, and thus multivalent cations are less likely to permeate. On the other hand, since the neutral condition in terms of charge when anions permeate is satisfied, the permeation of alkali metal ions is promoted, and the separation of multivalent cations and alkali metal ions can be more efficiently performed.

The magnesium chloride removal rate of the nanofiltration membrane is preferably 70% or more and 95% or less. From the viewpoint of selective separability between multivalent ions and alkali metal ions, the magnesium chloride removal rate is preferably 70% or more, and more preferably 80% or more. From the viewpoint of the alkali metal ion permeability, the magnesium chloride removal rate is preferably 95% or less, and more preferably 85% or less.

In order to separate alkali metal ions and multivalent ions, it is preferable that the nanofiltration membrane has a charge on the membrane surface and can perform both separation by pores (size separation) and electrostatic separation by charges. In the case where the nanofiltration membrane satisfies the above conditions, both the separation by pores and the electrostatic separation by charges are possible.

Examples of a material of the nanofiltration membrane include a polymer such as a cellulose acetate-based polymer, a polyamide, a sulfonated polysulfone, a polyacrylonitrile, a polyester, a polyimide, or a vinyl polymer. The nanofiltration membrane may be composed of only one material or may be composed of a plurality of materials. The structure of the nanofiltration membrane may be an asymmetric membrane having a dense layer on at least one surface of the membrane and having fine pores whose pore diameter gradually increases from the dense layer toward the inside of the membrane or the other surface, or a composite semipermeable membrane having a very thin separation functional layer formed of another material on the dense layer of the asymmetric membrane.

The composite semipermeable membrane is preferably, for example, a membrane having a porous support membrane containing a polysulfone, and a separation functional layer containing a polyamide provided on the porous support membrane. The composite semipermeable membrane may include a substrate in addition to the porous support membrane and the separation functional layer, and in this case, the porous support membrane is provided on at least one surface of the substrate. The polyamide is a thin membrane formed on the porous support membrane by a polycondensation reaction between a polyfunctional aliphatic amine and a polyfunctional aromatic acid halide.

The separation functional layer in the composite semipermeable membrane preferably contains 50 mass% or more, more preferably 80 mass% or more, and still more preferably 90 mass% or more, of a semi-aromatic crosslinked polyamide obtained by interfacial polycondensation between a divalent or higher polyfunctional aliphatic amine compound and a divalent or higher polyfunctional aromatic acid halide, and particularly preferably consists only of the semi-aromatic crosslinked polyamide. When the semi-aromatic crosslinked polyamide is contained in an amount of 50 mass% or more, excessive densification due to $\pi$-$\pi$ interaction derived from the aromatic ring in the semi-aromatic crosslinked polyamide is prevented, and excellent alkali metal ion permeability is obtained.

The polyfunctional aliphatic amine is preferably an alicyclic diamine, and more preferably 4,4'-bipiperidine or a piperazine derivative.

The alicyclic diamine preferably has a molecular weight of 90 or more and 160 or less. In the case where the molecular weight of the alicyclic diamine is 90 or more, a diffusion coefficient of the amine is reduced, and the polyamide is gradually formed during the interfacial polycondensation, so that the separation functional layer having a uniform pore diameter in a membrane thickness direction is easily formed from an initial stage to a middle stage of the polycondensation. Generally, at the initial and final stages of the polycondensation, oligomers are excessively formed on the surface of a support in contact with an organic layer, and pores on the surface of the support are blocked, which causes a pore diameter distribution in the membrane thickness direction to be non-uniform. However, in the case where the molecular weight of the alicyclic diamine is 160 or less, the molecular weight of the generated oligomers can be reduced and the interaction with the semi-aromatic crosslinked polyamide can be reduced, so that after the separation functional layer is formed by the polycondensation reaction, the oligomers are easily detached from the separation functional layer, and a separation functional layer having a uniform pore diameter in the membrane thickness direction is easily formed.

Examples of the alicyclic diamine having a molecular weight of 90 or more and 160 or less include substituted piperazines in which a piperazine ring is substituted with an alkyl group having 1 to 3 carbon atoms (for example, 2-methylpiperazine, 2-ethylpiperazine, 2-normalpropylpiperazine, 2,2-dimethylpiperazine, 2,2-diethylpiperazine, 2,3-dimethylpiperazine, 2,3-diethylpiperazine, 2,5-dimethylpiperazine, 2,5-diethylpiperazine, 2,6-dimethylpiperazine, 2,6-diethylpiperazine, and 2,3,5,6-tetramethylpiperazine), and homopiperazine.

The "polyfunctional aromatic acid halide" means an aromatic acid halide having two or more halogenated carbonyl groups in one molecule, and is not particularly limited as long as it gives a semi-aromatic crosslinked polyamide by a reaction with the polyfunctional aliphatic amine. As the polyfunctional aromatic acid halide, for example, halides of 1,3,5-benzenetricarboxylic acid, 1,2,4-benzenetricarboxylic acid, 1,3-benzenedicarboxylic acid, 1,4-benzenedicarboxylic acid, 1,3,5-benzenetrisulfonic acid, and 1,3,6-naphthalenetrisulfonic acid can be used. Among the polyfunctional aromatic acid halides, an acid chloride is preferred, and from the viewpoint of economic efficiency, availability, ease of handling, ease of reactivity, and the like, trimesoyl chloride which is an acid halide of 1,3,5-benzenetricarboxylic acid, isophthalic acid chloride which is an acid halide of 1,3-benzenedicarboxylic acid, terephthalic acid chloride which is an acid halide of 1,4-benzenedicarboxylic acid, 1,3,5-benzenetrisulfonic acid chloride which is an acid halide of 1,3,5-benzenetrisulfonic acid, and 1,3,6-naphthalenetrisulfonic acid chloride which is an acid halide of 1,3,6-naphthalenetrisulfonic acid are particularly preferred. The polyfunctional aromatic acid halide may be used alone or in combination of two or more kinds thereof. Among them, it is preferable to mix any one of bifunctional isophthalic acid chloride or terephthalic acid chloride with trifunctional trimesoyl chloride, 1,3,5-benzenetrisulfonic acid chloride, or 1,3,6-naphthalenetrisulfonic acid chloride since a molecular gap of a polyamide crosslinked structure is expanded and a membrane having a uniform pore diameter distribution can be controlled in a wide range. The mixing molar ratio of the trifunctional acid chloride and the bifunctional acid chloride is preferably 1:20 to 50:1, and more preferably 1:1 to 20:1.

The above composite semipermeable membrane is obtained, for example, by forming a porous support membrane on a substrate, and then subjecting a polyfunctional aliphatic amine and a polyfunctional aromatic acid halide to polycondensation on the porous support membrane to form a separation functional layer containing a semi-aromatic crosslinked polyamide. The difference between the magnesium sulfate removal rate and the magnesium chloride removal rate can be adjusted by adjusting a charging ratio of the polyfunctional aliphatic amine compound and the polyfunctional aromatic acid halide in the polycondensation. For example, the difference between the magnesium sulfate removal rate and the magnesium chloride removal rate can be reduced by reducing the charging ratio of the polyfunctional aromatic acid halide to the polyfunctional aliphatic amine compound.

(2-2) Separation Using Nanofiltration Membrane

The nanofiltration membrane is preferably used in a state of being incorporated into an element such as a spiral type.

In the nanofiltration step, the water to be treated is preferably fed to the nanofiltration membrane at an operating pressure in a range of 0.1 MPa or more and 8 MPa or less. When the operating pressure is 0.1 MPa or more, the membrane permeation rate is increased, and when the operating pressure is 8 MPa or less, damage to the nanofiltration membrane can be prevented. The operating pressure is more preferably 0.5 MPa or more and 6 MPa or less, and still more preferably 1 MPa or more and 4 MPa or less.

In the nanofiltration step, the water to be treated is fed to the nanofiltration membrane, and then a permeate and a concentrate are obtained. The permeate has higher purity of alkali metal ions and hydroxide ions than those in the water to be treated, and the concentrate has a lower purity of alkali metal ions and hydroxide ions than those in the water to be treated. On the other hand, since alkali metal ions are somewhat present in the concentrate, it is preferable to provide a circulation step of mixing the concentrate obtained in the nanofiltration step with the water to be treated. By providing the circulation step, the recovery rate for alkali metal ions is improved. In the present description, a liquid obtained by mixing a concentrate with water to be treated is also referred to as water to be treated.

In the case where the circulation step is provided, multivalent ions in the water to be treated are concentrated as the nanofiltration step proceeds, so that an osmotic pressure of the water to be treated increases. At this time, since the operating pressure increases in the case of constant flow rate filtration and a permeation flow rate decreases in the case of constant pressure filtration, it is preferable to provide a step of adding dilution water to at least one of the water to be treated and the concentrate according to the increase in salt concentration such as multivalent ions in the water to be treated. The dilution water is not particularly limited, and examples thereof include RO water having a salt concentration lower than that in the water to be treated, ion-exchanged water, and an alkaline aqueous solution.

In the case where the circulation step is provided, hydroxide ions permeate to the permeation side, so that the pH of the water to be treated decreases. Therefore, from the viewpoint of improving the recovery efficiency for alkali metal ions, it is preferable to include a step of controlling the pH of the water to be treated to 10 or more.

In the case where the circulation step is provided, examples of the method of controlling the pH of the water to be treated to 10 or more include a method of adding a hydroxide of a multivalent cation or an organic base to at least one of the water to be treated and the concentrate.

Examples of the hydroxide of a multivalent cation include calcium hydroxide (hereinafter, also referred to as "Ca(OH)$_2$"), magnesium hydroxide, aluminum hydroxide, iron hydroxide, copper hydroxide, zinc hydroxide, cobalt hydroxide, nickel hydroxide, and manganese hydroxide. Among them, calcium hydroxide having high solubility is preferred.

Examples of the organic base include: primary amines such as ethylamine, diglycolamine, and ethylenediamine; secondary amines such as diethylamine and diethanolamine; tertiary amines such as dimethylethanolamine; quaternary ammonium salts such as tetramethylammonium hydroxide, tetraethylammonium hydroxide, tetrapropylammonium hydroxide, tetrabutylammonium hydroxide, ethyltrimethylammonium hydroxide, benzyltrimethylammonium hydroxide, dimethylbis(2-hydroxyethyl)ammonium hydroxide, and choline; and heterocyclic amines such as pyrrole, piperidine, and 1,8-diazabicyclo[5.4.0]-7-undecene.

In the case of also providing the step of adding dilution water, an aqueous solution having a pH of 10 or more is preferably used as the dilution water. By using an aqueous solution having a pH of 10 or more as the dilution water, when the circulation step is performed while adding the dilution water and the nanofiltration step proceeds, the amount of hydroxide ions that have permeated to the permeation side is supplemented in the water to be treated, so that the alkali metal ion permeability can be maintained and the recovery rate for alkali metal ions can be improved. The pH of the dilution water is preferably 11 or more, and more preferably 12 or more. On the other hand, the pH of the dilution water is preferably 14 or less.

The dilution water is more preferably an aqueous solution having a pH of 10 or more in which a hydroxide of a multivalent cation or an organic base is dissolved. When the counter cation of hydroxide ions dissolved in the dilution water is a multivalent cation, only hydroxide ions can be added, as a component permeating the nanofiltration membrane, to the water to be treated, and permeation of alkali metal ions in the water to be treated can be efficiently performed. The hydroxide of a multivalent cation and the organic base dissolved in the dilution water are as described above.

The ratio of a permeation flow rate (L/min) to a concentrate flow rate (L/min) in the nanofiltration step is preferably 0.5:9.5 to 2:8, and more preferably 0.8:9.2 to 1.5:8.5 in terms of permeation flow rate (L/min):concentrate flow rate (L/min).

The permeation flux in the nanofiltration step is preferably 0.1 m$^3$/m$^2$/d or more, and more preferably 0.2 m$^3$/m$^2$/d or more. On the other hand, the permeation flux is preferably 2.0 m$^3$/m$^2$/d or less, and more preferably 1.5 m$^3$/m$^2$/d or less. When the permeation flux is 0.1 m$^3$/m$^2$/d or more, alkali metal ions and hydroxide ions can be efficiently allowed to permeate. When the permeation flux is 2.0 m$^3$/m$^2$/d or less, an amount of the dilution water to be used for highly recovering alkali metal ions and hydroxide ions can be reduced.

Further, when the permeation flux is 0.1 m$^3$/m$^2$/d or more and the concentrate flow rate is larger than the permeation flow rate, that is, a linear velocity of the concentrate on the membrane surface is increased, fouling due to precipitates on the membrane surface to be described later can be efficiently prevented.

In order to improve the purity of alkali metal ions and hydroxide ions, the nanofiltration step may be performed again using the permeate obtained in the nanofiltration step as the water to be treated.

For example, in the case of recovering lithium ions and hydroxide ions, the ratio (Li$^+$/Ca$^{2+}$) of the lithium ion concentration (hereinafter "Li$^+$") to the calcium ion concentration (hereinafter "Ca$^{2+}$") in the permeate and the ratio {OH$^-$/(SO$_4$$^{2-}$ or CO$_3$$^{2-}$)} of the hydroxide ion concentration (hereinafter "OH$^-$") to the sulfate ion concentration (hereinafter "SO$_4$$^{2-}$") or the carbonate ion concentration (hereinafter "CO$_3$$^{2-}$") in the permeate are preferably 5 times or more Li$^+$/Ca$^{2+}$ and {OH$^-$/(SO$_4$$^{2-}$ or CO$_3$$^{2-}$)} in the water to be treated, respectively, since lithium hydroxide can be recovered with high purity from the permeate, and are more preferably 6 times or more, and still more preferably 7 times or more.

(3) Treatment on Concentrate Using Ultrafiltration Membrane

In the case of performing the nanofiltration step including the circulation step, it is preferable to include a step of passing the concentrate obtained in the nanofiltration step through the ultrafiltration membrane.

In the case where the nanofiltration step including the circulation step is proceeded, the concentration of multivalent cations contained in the water to be treated or the concentrate increases, and the salt (multivalent salt) of multivalent cations and multivalent anions (SO$_4$$^{2-}$, CO$_3$$^{2-}$, and the like) in the water to be treated may be precipitated. In particular, in the case of adding multivalent cations or dilution water containing multivalent cations to the water to be treated, the multivalent salt is easily precipitated. Therefore, in the circulation step, the concentrate obtained in the nanofiltration step is preferably passed through the ultrafiltration membrane and then mixed with the water to be treated. By continuing the nanofiltration step while removing the multivalent salt precipitated in the concentrate using the ultrafiltration membrane, the fouling on the nanofiltration membrane can be prevented, and alkali metal ions and hydroxide ions can be efficiently recovered.

In addition, by treating the concentrate, rather than the water to be treated, using the ultrafiltration membrane, a residual pressure in the concentrate stream can be used as the operating pressure in the ultrafiltration.

(4) Treatment Using Anion Exchange Resin

From the viewpoint of preventing the precipitation of the multivalent salt described in "(3) Treatment on Concentrate Using Ultrafiltration Membrane" described above, in the case of performing the nanofiltration step including the circulation step, it is also preferable to include a step of bringing at least one of the water to be treated and the concentrate obtained in the nanofiltration step into contact with an anion exchange resin and mixing the at least one with the water to be treated.

By bringing the water to be treated or the concentrate obtained in the nanofiltration step into contact with the anion exchange resin, multivalent anions ($SO_4^{2-}$, $CO_3^{2-}$, and the like) are adsorbed to the anion exchange resin, and the concentration decreases, so that the precipitation of the multivalent salt can be prevented. By preventing the precipitation of the multivalent salt, the nanofiltration step can be continued while preventing the fouling on the nanofiltration membrane, and alkali metal ions and hydroxide ions can be efficiently recovered.

The kind of the anion exchange resin is not particularly limited, and a strongly basic anion exchange resin is preferably used from the viewpoint of removing multivalent anions. The anion exchange resin is preferably of an OH type from the viewpoint of efficiently feeding hydroxide ions that permeates the nanofiltration membrane together with alkali metal ions as the recovery target.

Examples of a method of bringing the water to be treated or the concentrate into contact with the anion exchange resin include a method of adding the anion exchange resin to a target solution and a method of passing a target solution through a fixed bed of the anion exchange resin. Among them, from the viewpoint of handleability of the anion exchange resin, a method of passing a target solution through a fixed bed of the anion exchange resin is preferred. In the method of passing a target solution through a fixed bed of the anion exchange resin, an SV value (= feed flow rate/filling volume), which is a ratio of a feed flow rate of the target solution to the fixed bed to a filling volume of the anion exchange resin in the fixed bed, is preferably operated within a range described in the specification of the anion exchange resin.

This step is preferably performed in parallel with the nanofiltration step. By bringing the water to be treated or the concentrate into contact with the OH-type anion exchange resin while performing the nanofiltration step, hydroxide ions released together with the adsorption of multivalent anions to the anion exchange resin can be passed through the nanofiltration membrane together with alkali metal ions as the recovery target, an excessive increase in pH of the water to be treated can be prevented, and deterioration of the nanofiltration membrane can be prevented. In the case of performing the treatment step with the anion exchange resin in parallel with the nanofiltration step, the SV value and the flow rate of the water to be treated or the concentrate to be fed to the anion exchange resin are preferably set such that the pH of the water to be treated is maintained to 10 or more.

When the concentration of multivalent anions in the water to be treated is equal to or lower than a concentration corresponding to the solubility of the multivalent salt with respect to multivalent anions (hereinafter "multivalent anion solubility"), it is not necessary to bring the water to be treated into contact with the anion exchange resin any more, but the treatment using the anion exchange resin is preferably continued until the concentration of multivalent anions is equal to or lower than the multivalent anion solubility.

In the case where the fixed bed of the anion exchange resin is broken during the nanofiltration step, the fixed bed is preferably regenerated with an alkali. The alkali used for regeneration is not particularly limited, and a sodium hydroxide aqueous solution, a calcium hydroxide aqueous solution, or the like can be used. It is preferable to adopt a method in which the same fixed bed is prepared in preparation for the case where the fixed bed of the anion exchange resin is broken, and while one fixed bed is being regenerated, the other fixed bed is used.

(5) Method for Recovering Alkali Metal Hydroxide

An alkali metal hydroxide can be recovered by crystallization or the like from the permeate containing alkali metal ions and hydroxide ions obtained by the recovery method described above.

In the case of recovering the alkali metal hydroxide, the alkali metal ion concentration (mg/L) as the recovery target contained in the permeate of the nanofiltration membrane is preferably 1 mg/L or more, more preferably 10 mg/L or more, and still more preferably 100 mg/L or more. When the concentration is 1 mg/L or more, the efficiency when the alkali metal hydroxide is precipitated by crystallization or the like is improved.

When the alkali metal ion concentration (mg/L) as the recovery target contained in the permeate of the nanofiltration membrane is less than 1 mg/L, a concentration step of concentrating the obtained permeate of the nanofiltration membrane may be provided. A method of concentrating the permeate is not particularly limited, and examples thereof include concentration by evaporation and concentration using a reverse osmosis membrane.

Examples of the alkali metal hydroxide include lithium hydroxide, sodium hydroxide, potassium hydroxide, rubidium hydroxide, cesium hydroxide, and francium hydroxide. Among them, from the viewpoint of the value of the recovery target, the alkali metal hydroxide preferably includes at least one selected from the group consisting of lithium hydroxide, rubidium hydroxide, cesium hydroxide, and francium hydroxide, and more preferably includes lithium hydroxide.

(6) Positive Electrode Material of Lithium Ion Battery

In the case where the alkali metal hydroxide obtained in "(5) Method for Recovering Alkali Metal Hydroxide" described above is lithium hydroxide, a positive electrode material of a lithium ion battery can be synthesized using this lithium hydroxide.

As a method for synthesizing the positive electrode material of the lithium ion battery, a known method can be adopted. Examples thereof include a solid phase reaction method, a sol-gel method, a coprecipitation method, a hydrothermal method, and a spray pyrolysis method. Among them, a known coprecipitation method is preferred (Schmuch R, Wagner R, Hoerpel G, Placke T, Winter M. 2018. Performance and cost of materials for lithium-based rechargeable automotive batteries. Nat Energy. 3(4):270).

Examples of the positive electrode material include LMO, NCA, LNMO, LFP, LMFP, NMC111, NMC532, NMC622, and NMC811. Among them, since high nickel-based NMC811 uses Li hydroxide as a raw material instead of Li carbonate, NMC811 is particularly preferred as the positive electrode material in the present invention.

NMC811 is synthesized by, for example, the coprecipitation method described in the above literature. First, an aqueous solution of cobalt sulfate, nickel sulfate, a base (NaOH or $Na_2CO_3$), and a surfactant ($NH_4OH$) is fed to a continuous stirred-tank reactor (CSTR), in which a metal hydroxide or carbonate is precipitated. Filtration and washing are repeated to remove impurities, the material is dried, sieved, and mixed with a stoichiometric amount of lithium hydroxide. Thereafter, firing is performed at 650°C to 950°C to form NMC811.

(7) Recovery Apparatus

A recovery apparatus according to the present invention includes a nanofiltration unit configured to separate water to be treated using a nanofiltration membrane, in which the water to be treated contains alkali metal ions and multivalent ions, has a pH of 10 or more, and has a hydroxide ion concentration (mol/L) lower than the sum of concentrations of the alkali metal ions (mol/L), and the nanofiltration membrane is such that a difference is 40% or more between a glucose removal rate when a 1,000 mg/L glucose aqueous solution having a temperature of 25°C and a pH of 6.5 is passed through the nanofiltration membrane at an operating pressure of 0.5 MPa and an isopropyl alcohol removal rate when a 1,000 mg/L isopropyl alcohol aqueous solution having a temperature of 25°C and a pH of 6.5 is passed through the nanofiltration membrane at an operating pressure of 0.5 MPa, the glucose removal rate of 70% or more, and a magnesium sulfate removal rate of 95% or more when a 2,000 mg/L magnesium sulfate aqueous solution having a temperature of 25°C and a pH of 6.5 is passed through the nanofiltration membrane at an operating pressure of 0.5 MPa.

With the above configuration, the recovery apparatus according to the present invention can recover alkali metal ions and hydroxide ions with high purity and high efficiency from water to be treated containing alkali metal ions and multivalent ions and having a pH of 10 or more.

The water to be treated and the nanofiltration membrane are as described in "(1) Method for Recovering Alkali Metal Ion and Hydroxide Ion" and "(2) Nanofiltration Step" described above.

The nanofiltration membrane is preferably filled in a pressure container (vessel) in the form of a spiral element.

The recovery apparatus according to the present invention preferably includes a circulation unit configured to mix the concentrate obtained by the nanofiltration unit with the water to be treated. By providing the circulation unit, the recovery rate for alkali metal ions is improved.

The recovery apparatus according to the present invention preferably includes a unit configured to add dilution water to the water to be treated. By providing the unit configured to add dilution water, an increase in osmotic pressure of the water to be treated can be prevented.

The recovery apparatus according to the present invention preferably includes the circulation unit and a unit configured to pass the concentrate through an ultrafiltration membrane. It is more preferable that the permeation unit is provided in the circulation unit. By providing the permeation unit, the fouling on the nanofiltration membrane can be prevented, and alkali metal ions and hydroxide ions can be efficiently recovered.

The recovery apparatus according to the present invention preferably includes a unit configured to bring at least one of the water to be treated and the concentrate obtained by the nanofiltration unit into contact with an anion exchange resin and mix the at least one with the water to be treated. By providing the above unit, the fouling on the nanofiltration membrane can be prevented, and alkali metal ions and hydroxide ions can be efficiently recovered.

In the recovery apparatus according to the present invention, in order to implement the above units, a pump, a pipe, a valve, a tank, a vessel, a temperature control device, an instrument (such as a pH meter, an electric conductivity meter, a flowmeter, or a pressure gauge), and the like having resistance to the water to be treated having a pH of 10 or more can be selected and freely combined.

EXAMPLES

Hereinafter, the present invention is described with reference to Examples, but the present invention is not limited to these Examples. Measurements in Inventive Examples and Comparative Examples were performed as follows.

<Performance of Nanofiltration Membrane>

(Glucose Removal Rate and Isopropyl Alcohol Removal Rate of Nanofiltration Membrane)

The isopropyl alcohol removal rate was calculated according to the following equation (1) based on the isopropyl alcohol concentration in feed water and the isopropyl alcohol concentration in permeated water when a 1,000 mg/L isopropyl alcohol aqueous solution having a temperature of 25°C and a pH of 6.5 as the feed water was passed through the nanofiltration membrane at an operating pressure of 0.5 MPa. The glucose removal rate was calculated according to the following equation (2) based on the glucose concentration in feed water and the glucose concentration in permeated water when a 1,000 mg/L glucose aqueous solution having a temperature of 25°C and a pH of 6.5 as the feed water was passed through the nanofiltration membrane at an operating pressure of 0.5 MPa.

Isopropyl alcohol removal rate (%) = 100 × {1 - (isopropyl alcohol concentration in permeated water/ isopropyl alcohol concentration in feed water)}  Equation (1)

Glucose removal rate (%) = 100 × {1- (glucose concentration in permeated water/glucose concentration in feed water)}  Equation (2)

The isopropyl alcohol concentration was determined using a gas chromatograph (GC-18A manufactured by Shimadzu Corporation), and the glucose concentration was determined using a refractometer (RID-6A manufactured by Shimadzu Corporation).

(Magnesium Sulfate Removal Rate and Magnesium Chloride Removal Rate of Nanofiltration Membrane)

The magnesium sulfate (hereinafter "$MgSO_4$") removal rate was calculated according to the following equation (3) based on the $MgSO_4$ concentration in feed water and the $MgSO_4$ concentration in permeated water when a 2,000 mg/L $MgSO_4$ aqueous solution having a temperature of 25°C and a pH of 6.5 as the feed water was passed through the nanofiltration membrane at an operating pressure of 0.5 MPa. The magnesium chloride (hereinafter "$MgCl_2$") removal rate was calculated according to the following equation (4) based on the $MgCl_2$ concentration in feed water and the $MgCl_2$ concentration in permeated water when a 2,000 mg/L $MgCl_2$ aqueous solution having a temperature of 25°C and a pH of 6.5 as the feed water was passed through the nanofiltration membrane at an operating pressure of 0.5 MPa.

$MgSO_4$ removal rate (%) = 100 × {1 - ($MgSO_4$ concentration in permeated water/$MgSO_4$ concentration in feed water)}  Equation (3)

$MgCl_2$ removal rate (%) = 100 × {1- ($MgCl_2$ concentration in permeated water/$MgCl_2$ concentration in feed water)}  Equation (4)

The $MgSO_4$ concentration and the $MgCl_2$ concentration were determined from the electric conductivities of the feed water and the permeated water, which were measured using an electrical conductivity meter manufactured by DKK-TOA CORPORATION, based on the respective practical salinity values, that is, the $MgSO_4$ concentration and the $MgCl_2$ concentration.

<Water to be Treated>

Water to be treated a to water to be treated g shown in Table 1 were prepared as follows.

[Table 1]

|  |  | pH | $Li^+$ | $Na^+$ | $Ca^{2+}$ | $Cl^-$ | $SO_4^{2-}$ | $CO_3^{2-}$ |
|---|---|---|---|---|---|---|---|---|
|  | Symbol | - | mmol/L | mmol/L | mmol/L | mmol/L | mmol/L | mmol/L |
| Water to be treated | a | 12.0 | 100 | < 0.1 | 13 | < 0.1 | 58 | < 0.1 |
|  | b | 11.0 | 100 | < 0.1 | 13 | < 0.1 | 63 | < 0.1 |
|  | c | 12.4 | 100 | < 0.1 | 13 | < 0.1 | 50 | < 0.1 |
|  | d | 12.4 | 10 | < 0.1 | 13 | < 0.1 | 5 | < 0.1 |
|  | e | 9.5 | 100 | < 0.1 | 13 | < 0.1 | 63 | < 0.1 |
|  | f | 12.4 | 100 | < 0.1 | 13 | < 0.1 | < 0.1 | 50 |
|  | g | 12.4 | 100 | 200 | 13 | 200 | 50 | < 0.1 |

(Water to be Treated a)

Lithium sulfate, calcium sulfate, and calcium hydroxide were dissolved in water to prepare water to be treated having a $Ca^{2+}$ concentration of 13 mmol/L, a $Li^+$ concentration of 100 mmol/L, and a pH of 12.0.

(Water to be Treated b)

Water to be treated b was prepared in the same manner as the water to be treated a except that lithium sulfate, calcium sulfate, and calcium hydroxide were dissolved in water to adjust the pH to 11.

(Water to be Treated c)

Water to be treated c was prepared in the same manner as the water to be treated a except that lithium sulfate, calcium sulfate, and calcium hydroxide were dissolved in water to adjust the pH to 12.4.

(Water to be Treated d)

Water to be treated d was prepared in the same manner as the water to be treated c except that lithium sulfate, calcium sulfate, and calcium hydroxide were dissolved in water to adjust the $Li^+$ concentration to 10 mmol/L.

(Water to be Treated e)

Water to be treated e was prepared in the same manner as the water to be treated a except that lithium sulfate, calcium sulfate, and calcium hydroxide were dissolved in water to adjust the pH to 9.5.

(Water to be Treated f)

Lithium carbonate and calcium hydroxide were dissolved in water to prepare water to be treated f having a $Ca^{2+}$ concentration of 13 mmol/L, a $Li^+$ concentration of 100 mmol/L, and a pH of 12.4.

(Water to be Treated g)

Water to be treated g was prepared in the same manner as the water to be treated c except that sodium chloride (hereinafter "NaCl") was dissolved to adjust a NaCl concentration to 200 mmol/L.

<Dilution Water>

Diluent water I to dilution water VI shown in Table 2 were prepared as follows.

[Table 2]

| | | pH | Li$^+$ | Na$^+$ | Ca$^{2+}$ | Cl$^-$ | SO$_4{}^{2-}$ | CO$_3{}^{2-}$ |
|---|---|---|---|---|---|---|---|---|
| | Symbol | - | mmol/L | mmol/L | mmol/L | mmol/L | mmol/L | mmol/L |
| Dilution water | I | 7.0 | < 0.1 | < 0.1 | < 0.1 | < 0.1 | < 0.1 | < 0.1 |
| | II | 12.4 | < 0.1 | < 0.1 | 12.6 | < 0.1 | < 0.1 | < 0.1 |
| | III | 12.4 | < 0.1 | 25.1 | < 0.1 | < 0.1 | < 0.1 | < 0.1 |
| | IV | 11.0 | < 0.1 | < 0.1 | 0.50 | < 0.1 | < 0.1 | < 0.1 |
| | V | 12.0 | < 0.1 | < 0.1 | 5.00 | < 0.1 | < 0.1 | < 0.1 |
| | VI | 9.5 | < 0.1 | < 0.1 | 0.016 | < 0.1 | < 0.1 | < 0.1 |

(Dilution Water I)

Water obtained through a reverse osmosis membrane was directly used.

(Dilution Water II)

Calcium hydroxide was dissolved in water to prepare dilution water II having a Ca$^{2+}$ concentration of 12.6 mmol/L and a pH of 12.4.

(Dilution Water III)

Sodium hydroxide was dissolved in water to prepare dilution water III having a sodium ion (hereinafter "Na$^+$") concentration of 25.1 mmol/L and a pH of 12.4.

(Dilution Water IV)

Calcium hydroxide was dissolved in water to prepare dilution water IV having a Ca$^{2+}$ concentration of 0.50 mmol/L and a pH of 11.

(Dilution Water V)

Calcium hydroxide was dissolved in water to prepare dilution water V having a Ca$^{2+}$ concentration of 5.00 mmol/L and a pH of 12.

(Dilution Water VI)

Calcium hydroxide was dissolved in water to prepare dilution water VI having a Ca$^{2+}$ concentration of 0.016 mmol/L and a pH of 9.5.

<Nanofiltration Membrane>

(Nanofiltration Membrane A)

A 18.0 mass% dimethylformamide (hereinafter "DMF") solution of polysulfone was cast at a thickness of 180 $\mu$m at a condition of 25°C onto a nonwoven fabric (air permeability: 1 cc/cm$^2$/s) made of a polyester fiber, immediately immersed in pure water, and left to stand for 5 minutes to prepare a porous support membrane (thickness: 160 $\mu$m) made of a fiber-reinforced polysulfone.
Next, a membrane surface temperature of the porous support membrane was adjusted to 25°C while blowing air adjusted to 25°C to the porous support membrane to remove excess moisture. The surface of the porous support membrane was coated with an aqueous solution at 30°C in which 2.0 mass% of piperazine, 250 ppm by mass of sodium dodecyl diphenyl ether disulfonate, and 1.0 mass% of trisodium phosphate were dissolved, and was allowed to stand for 15 seconds, and then nitrogen was blown from an air nozzle to remove excess aqueous solution, to thereby form a coating layer of an amine aqueous solution on the porous support membrane. Further, the entire surface of the porous support membrane was uniformly coated with an n-decane solution at 38°C containing 0.2 mass% of trimesoyl chloride (hereinafter "TMC"), and then allowed to stand at a relative humidity of 70% and a temperature of 25°C for 1 minute to perform interfacial polycondensation, and two fluids (pure water and air) were blown onto the membrane surface to remove the solution on the surface. Thereafter, the membrane was washed with pure water at 80°C to obtain the nanofiltration membrane A.

(Nanofiltration Membrane B)

The nanofiltration membrane B was obtained by preparing a nanofiltration membrane in the same manner as in the nanofiltration membrane A, except that 2,5-dimethylpiperazine was used instead of piperazine, and the entire surface of the porous support membrane was uniformly coated with an n-decane solution at 38°C containing 0.2 mass% of TMC and then allowed to stand at a relative humidity of 80% and 25°C for 1 minute.

(Nanofiltration Membrane C)

SelRO (registered trademark) MPS-34 manufactured by KOCH Industries, Inc. was used as the nanofiltration membrane C.

(Nanofiltration Membrane D)

The nanofiltration membrane D was obtained by preparing a nanofiltration membrane in the same manner as in the nanofiltration membrane A except that the concentration of TMC was set to 0.5 mass%.
Table 3 shows the membrane performance of the nanofiltration membrane A, the nanofiltration membrane B, the nanofiltration membrane C, and the nanofiltration membrane D.

[Table 3]

| | Glucose removal rate | Isopropyl alcohol removal rate | (Glucose removal rate) - (isopropyl alcohol removal rate) | $MgCl_2$ removal rate | $MgSO_4$ removal rate | ($MgSO_4$ removal rate) - ($MgCl_2$ removal rate) |
|---|---|---|---|---|---|---|
| | (%) | (%) | (%) | (%) | (%) | (%) |
| Nanofiltration membrane A | 96.1 | 40.7 | 55.4 | 86.2 | 99.8 | 13.6 |
| Nanofiltration membrane B | 81.0 | 26.1 | 54.9 | 86.7 | 99.6 | 12.9 |
| Nanofiltration membrane C | 85.7 | 38.0 | 47.7 | 90.4 | 92.4 | 2.0 |
| Nanofiltration membrane D | 95.8 | 38.1 | 57.7 | 74.2 | 99.1 | 24.9 |

(Spiral Element as Nanofiltration Membrane)

Spiral elements each having an effective membrane area of 0.5 $m^2$, a diameter of 6.4 cm, and a length of 30 cm were prepared using the nanofiltration membranes A to D. The permeation flux ($m^3/m^2/d$) was calculated by dividing the permeation flow rate ($m^3/d$) by the effective membrane area.

<Permeate>

After the completion of the nanofiltration step, each of the ion concentrations in the collected permeate was measured using an ICP emission spectrometer for cations and using ion chromatography for anions. The hydroxide ion concentration was calculated according to the following equation (5) by measuring the pH (hereinafter "P") of the permeate using a pH meter.

$$\text{Hydroxide ion concentration (moL/L)} = 10^{\wedge}(14\text{-}P) \qquad \text{Equation (5)}$$

Each molar ratio was calculated based on the obtained ion concentrations.

(Li⁺ Recovery Rate)

The Li⁺ recovery rate was according to the following equation (6).

$$\text{Li}^+ \text{ recovery rate } (\%) = W2/W1 \times 100 \qquad \text{Equation (6)}$$

Here, W1 was the amount of Li⁺ (g) in the water to be treated, and W2 was the amount of Li⁺ (g) in the permeate, which were calculated according to the following equations (7) and (8), respectively.

$$W1 = \text{amount (L) of water to be treated} \times \text{Li}^+ \text{ concentration (mg/L) in water to be treated} \qquad \text{Equation (7)}$$

$$W2 = \text{permeation amount (L)} \times \text{Li}^+ \text{ concentration (mg/L) in permeate} \qquad \text{Equation (8)}$$

[Example 1]

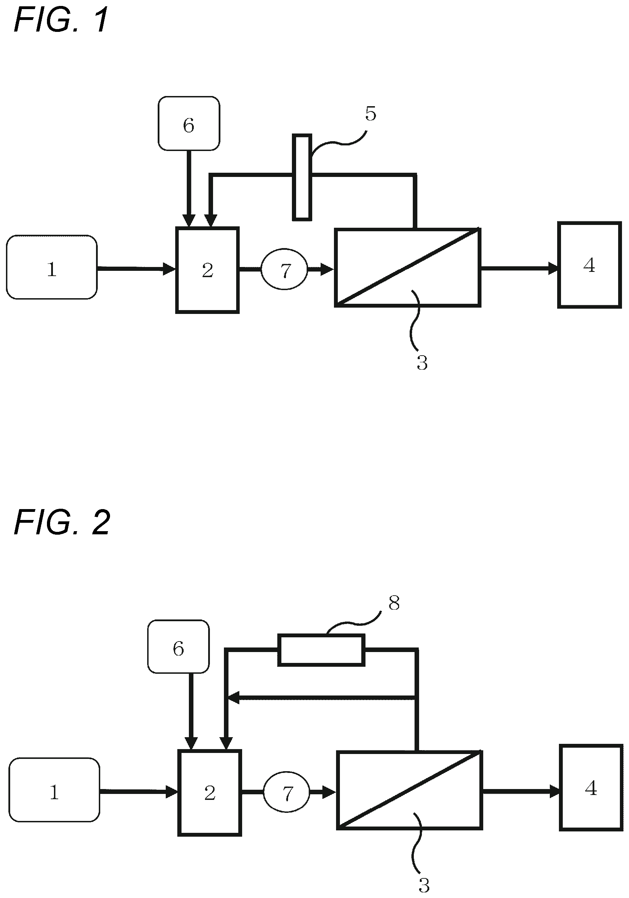

In a configuration shown in FIG. 1, a membrane element using the nanofiltration membrane B was operated with respect to 10 L of the water to be treated c having a temperature of 25°C by a cross flow filtration method under the conditions of permeation flow rate: concentrate flow rate = 1:9 and a permeation flow rate of 0.17 L/min, the permeate and a liquid obtained by passing the concentrate liquid through an ultrafiltration membrane were returned to a raw water tank containing the water to be treated c, and the system was operated for 30 minutes to be stabilized. As the ultrafiltration membrane, HFUG manufactured by Toray Industries, Inc. was used. Thereafter, the permeate was discharged to a permeate tank, and at the same time, the dilution water II was added from a dilution water tank to the raw water tank at a flow rate of 0.17 L/min. After 10 hours, the feeding of the permeate to the permeate tank was stopped, and the addition of the dilution water II was also stopped. The analysis results of the composition of the permeate discharged to the permeate tank are shown in Table 4. The Li⁺ recovery rate, Li⁺/Ca²⁺, and OH⁻/SO₄²⁻ in the permeate were high, and lithium ions and hydroxide ions could be recovered with high purity and a high recovery rate. In Li⁺/Na⁺ and OH⁻/Cl⁻ in Table 4, "-" means "incalculable". This is because no Na⁺ and Cl⁻ were substantially detected in the permeate.

[Example 2]

The same method as in Example 1 was performed except that the water to be treated c was changed to the water to be treated f. The analysis results of the composition of the permeate are shown in Table 4. In this example, multivalent anions in the water to be treated were changed from $SO_4^{2-}$ to $CO_3^{2-}$ as compared with Example 1, but the Li⁺ recovery rate, Li⁺/Ca²⁺, and OH⁻/CO₃²⁻ in the permeate were high, and lithium ions and hydroxide ions could be recovered with high purity and a high recovery rate.

[Example 3]

The same method as in Example 1 was performed except that the water to be treated c was changed to the water to be treated b and the dilution water II was changed to the dilution water IV. The analysis results of the composition of the permeate are shown in Table 4.

[Example 4]

The same method as in Example 1 was performed except that the water to be treated c was changed to the water to be treated a and the dilution water II was changed to the dilution water V. The analysis results of the composition of the permeate are shown in Table 4.

It can be seen that when Examples 1, 3 and 4 are compared with each other, the higher the pH of the water to be treated, the higher the Li⁺ recovery rate, Li⁺/Ca²⁺, and OH⁻/SO₄²⁻, and lithium ions and hydroxide ions can be recovered with high purity and a high recovery rate.

[Example 5]

The same method as in Example 1 was performed except that the water to be treated c was changed to the water to be treated g. The analysis results of the composition of the permeate are shown in Table 4. It can be seen that in the case where the NaCl concentration in the water to be treated is high, $Na^+$ and $Cl^-$ permeate into the permeate together with $Li^+$ and $OH^-$, and thus $Li^+/Na^+$ and $OH^-/Cl^-$ both decrease, that is, the purity decreases.

[Example 6]

The same method as in Example 1 was performed except that permeation flow rate: concentrate flow rate was 5:5. The analysis results of the composition of the permeate are shown in Table 4. It can be seen that when the concentrate flow rate decreases, $Li^+/Ca^{2+}$ in the permeate decreases due to concentration polarization on the membrane surface.

[Example 7]

The same method as in Example 1 was performed except that the dilution water II was changed to the dilution water I. The analysis results of the composition of the permeate are shown in Table 4. It can be seen that in the case where the pH of the dilution water is low, the pH of the water to be treated is lowered with the passage of time, so that the permeability of $Li^+$ decrease, and the recovery rates and purities of lithium ions and hydroxide ions decrease.

[Example 8]

The same method as in Example 1 was performed except that the dilution water II was changed to the dilution water III. The analysis results of the composition of the permeate are shown in Table 5. It can be seen that in the case where the NaOH aqueous solution is used as the dilution water, $Na^+$ permeates into the permeate together with $Li^+$, and the permeability of $Li^+$ decreases, so that both $Li^+/Ca^{2+}$ and $Li^+/Na^+$ decrease, that is, the purity decreases.

[Example 9]

The same method as in Example 1 was performed except that the nanofiltration membrane B was changed to the nanofiltration membrane A. The analysis results of the composition of the permeate are shown in Table 5. In the case where the nanofiltration membrane A having a particularly high glucose removal rate of more than 90% was used, the permeability of $Li^+$ decreased, and thus $Li^+/Ca^{2+}$ decreased.

[Example 10]

The same method as in Example 1 was performed except that no ultrafiltration membrane was used. However, since the operating pressure increased due to the fouling caused by scale components during the filtration, the filtration was continued by switching to a constant pressure operation when the operating pressure reached a value 1.5 times the initial operating pressure. The analysis results of the composition of the permeate are shown in Table 5. In this example, since no ultrafiltration membrane was used as compared with Example 1, the nanofiltration membrane was fouled by the scale components generated during the operation, the permeation amount decreased, and the $Li^+$ recovery rate decreased.

[Example 11]

In a configuration shown in FIG. 2, the same method as in Example 1 was performed except that no ultrafiltration membrane was used, a part of the concentrate in the nanofiltration step was brought into contact with an OH-type strongly basic anion exchange resin, and the dilution water II was changed to the dilution water I. As the OH-type strongly basic anion exchange resin, DIAION SA10AOH manufactured by Mitsubishi Chemical Corporation was packed in an amount of 2 L into a column and used. The feed flow rate of the concentrate to the column was adjusted such that the pH of the solution in the raw water tank was 12 to 14. The analysis results of the composition of the permeate are shown in Table 5. In this example, no ultrafiltration membrane was used and the pH of the dilution water was low, but by bringing a part of the concentrate into contact with the anion exchange resin and mixing it with the water to be treated, the $Li^+$ recovery rate, $Li^+/Ca^{2+}$, and $OH^-/SO_4^{2-}$ in the permeate were high, and lithium ions and hydroxide ions can be recovered with high purity and a high recovery rate.

[Example 12]

The same method as in Example 9 was performed except that the nanofiltration membrane A was changed to the nanofiltration membrane D. The analysis results of the composition of the permeate are shown in Table 5. Even in the case where the nanofiltration membrane D having a large difference between the magnesium sulfate removal rate and the magnesium chloride removal rate with respect to the nanofiltration membrane A was used, Li could be recovered. However, since the permeability of $Ca^{2+}$ was high and the permeability of $Li^+$ decreased, $Li^+/Ca^{2+}$ was lower as compared with Example 9.

[Comparative Example 1]

The same method as in Example 1 was performed except that the water to be treated c was changed to the water to be treated e and the dilution water II was changed to the dilution water VI. The analysis results of the composition of the permeate are shown in Table 5. In the case where the pH of the water to be treated was less than 10, $Li^+$ hardly permeated, and the $Li^+$ recovery rate remarkably decreased.

[Comparative Example 2]

The same method as in Example 1 was performed except that the water to be treated c was changed to the water to be treated d. The analysis results of the composition of the permeate are shown in Table 5. Since the $OH^-$ concentration was higher than the $Li^+$ concentration in the water to be treated, the permeability of $Ca^{2+}$ was high, and $Li^+/Ca^{2+}$ in the permeate remarkably decreased.

[Comparative Example 3]

The same method as in Example 1 was performed except that the nanofiltration membrane B was changed to the nanofiltration membrane C. The analysis results of the composition of the permeate are shown in Table 5. Since the nanofiltration membrane C had a low $MgSO_4$ removal rate, the permeability of $Ca^{2+}$ was high, and $Li^+/Ca^{2+}$ in the permeate remarkably decreased.

[Table 4]

| | | | | Example 1 | Example 2 | Example 3 | Example 4 |
|---|---|---|---|---|---|---|---|
| Composition of water to be treated before circulation | | Symbol | - | c | f | b | a |
| | | pH | - | 12.4 | 12.4 | 11.0 | 12.0 |
| | | $(Na^+, Li^+)/OH^-$ | Molar ratio | 4 | 4 | 100 | 10 |
| | | $Li^+/Ca^{2+}$ | Molar ratio | 8 | 8 | 8 | 8 |
| | | $Li^+/Na^+$ | Molar ratio | > 10 | > 10 | > 10 | > 10 |
| | | $OH^-/(SO_4^{2-}$ or $CO_3^{2-})$ | Molar ratio | 0.50 | 0.50 | 0.02 | 0.17 |
| | | $OH^-/Cl^-$ | Molar ratio | > 10 | > 10 | > 10 | > 10 |
| Condition in nanofiltration step | Dilution water | Symbol | - | II | II | IV | V |
| | | pH | - | 12.4 | 12.4 | 11.0 | 12.0 |
| | | Alkali kind | - | $Ca(OH)_2$ | $Ca(OH)_2$ | $Ca(OH)_2$ | $Ca(OH)_2$ |
| | Permeation flux | | $m^3/m^2/d$ | 0.5 | 0.5 | 0.5 | 0.5 |
| | Permeation flow rate:concentrate flow rate | | - | 1:9 | 1:9 | 1:9 | 1:9 |
| | Nanofiltration membrane | Symbol | - | B | B | B | B |

(continued)

|  |  |  | Example 1 | Example 2 | Example 3 | Example 4 |
|---|---|---|---|---|---|---|
| Composition of permeate | $Li^+/Ca^{2+}$ | Molar ratio | 80 | 80 | 50 | 60 |
|  | $Li^+/Na^+$ | Molar ratio | - | - | - | - |
|  | $OH^-/(SO_4^{2-}$ or $CO_3^{2-})$ | Molar ratio | 90 | 90 | 70 | 80 |
|  | $OH^-/Cl^-$ | Molar ratio | - | - | - | - |
|  | $Li^+$ recovery rate | % | 90 | 90 | 70 | 80 |

(Table 4 continued)

|  |  |  |  | Example 5 | Example 6 | Example 7 |
|---|---|---|---|---|---|---|
| Composition of water to be treated before circulation | Symbol | | - | g | c | c |
|  | pH | | - | 12.4 | 12.4 | 12.4 |
|  | $(Na^+, Li^+)/OH^-$ | | Molar ratio | 12 | 4 | 4 |
|  | $Li^+/Ca^{2+}$ | | Molar ratio | 8 | 8 | 8 |
|  | $Li^+/Na^+$ | | Molar ratio | 0.5 | > 10 | > 10 |
|  | $OH^-/(SO_4^{2-}$ or $CO_3^{2-})$ | | Molar ratio | 0.50 | 0.50 | 0.50 |
|  | $OH^-/Cl^-$ | | Molar ratio | 0.1 | > 10 | > 10 |
| Condition in nanofiltration step | Dilution water | Symbol | - | II | II | I |
|  |  | pH | - | 12.4 | 12.4 | 7.0 |
|  |  | Alkali kind | - | $Ca(OH)_2$ | $Ca(OH)_2$ | - |
|  | Permeation flux | | $m^3/m^2/d$ | 0.5 | 0.5 | 0.5 |
|  | Permeation flow rate:concentrate flow rate | | - | 1:9 | 5:5 | 1:9 |
|  | Nanofiltration membrane | Symbol | - | B | B | B |
| Composition of permeate | $Li^+/Ca^{2+}$ | | Molar ratio | 70 | 65 | 50 |
|  | $Li^+/Na^+$ | | Molar ratio | 0.6 | - | - |
|  | $OH^-/(SO_4^{2-}$ or $CO_3^{2-})$ | | Molar ratio | 85 | 60 | 40 |
|  | $OH^-/Cl^-$ | | Molar ratio | 0.1 | - | - |
|  | $Li^+$ recovery rate | | % | 90 | 90 | 60 |

[Table 5]

| | | | | | Example 8 | Example 9 | Example 10 | Example 11 |
|---|---|---|---|---|---|---|---|---|
| Composition of water to be treated before circulation | | Symbol | | - | c | c | c | c |
| | | pH | | - | 12.4 | 12.4 | 12.4 | 12.4 |
| | | $(Na^+, Li^+)/OH^-$ | | Molar ratio | 4 | 4 | 4 | 4 |
| | | $Li^+/Ca^{2+}$ | | Molar ratio | 8 | 8 | 8 | 8 |
| | | $Li^+/Na^+$ | | Molar ratio | > 10 | >10 | >10 | >10 |
| | | $OH^-/(SO_4^{2-}$ or $CO_3^{2-})$ | | Molar ratio | 0.50 | 0.50 | 0.50 | 0.50 |
| | | $OH^-/Cl^-$ | | Molar ratio | > 10 | > 10 | > 10 | > 10 |
| Condition in nanofiltration step | Dilution water | Symbol | | - | III | II | II | I |
| | | pH | | - | 12.4 | 12.4 | 12.4 | 7.0 |
| | | Alkali kind | | - | NaOH | $Ca(OH)_2$ | $Ca(OH)_2$ | - |
| | Permeation flux | | | $m^3/m^2/d$ | 0.5 | 0.5 | 0.5 | 0.5 |
| | Permeation flow rate:concentrate flow rate | | | - | 1:9 | 1:9 | 1:9 | 1:9 |
| | Nanofiltrati on membrane | Symbol | | - | B | A | B | B |
| Composition of permeate | | $Li^+/Ca^{2+}$ | | Molar ratio | 60 | 40 | 80 | 180 |
| | | $Li^+/Na^+$ | | Molar ratio | 0.05 | - | - | - |
| | | $OH^-/(SO_4^{2-}$ or $CO_3^{2-})$ | | Molar ratio | 90 | 90 | 90 | 150 |
| | | $OH^-/Cl^-$ | | Molar ratio | - | - | - | - |
| | | $Li^+$ recovery rate | | % | 80 | 80 | 75 | 92 |

(Table 5 continued)

| | | | | Example 12 | Comparative Example 1 | Comparative Example 2 | Comparative Example 3 |
|---|---|---|---|---|---|---|---|
| Composition of water to be treated before circulation | Symbol | | - | c | e | d | c |
| | pH | | - | 12.4 | 9.5 | 12.4 | 12.4 |
| | $(Na^+, Li^+)/OH^-$ | | Molar ratio | 4 | 3162 | 0.4 | 4 |
| | $Li^+/Ca^{2+}$ | | Molar ratio | 8 | 8 | 0.8 | 8 |
| | $Li^+/Na^+$ | | Molar ratio | > 10 | > 10 | > 10 | > 10 |
| | $OH^-/(SO_4^{2-}$ or $CO_3^{2-})$ | | Molar ratio | 0.50 | 0.001 | 4.62 | 0.50 |
| | $OH^-/Cl^-$ | | Molar ratio | > 10 | > 10 | > 10 | > 10 |
| Condition in nanofiltration step | Dilution water | Symbol | - | II | VI | II | II |
| | | pH | - | 12.4 | 9.5 | 12.4 | 12.4 |
| | | Alkali kind | - | $Ca(OH)_2$ | $Ca(OH)_2$ | $Ca(OH)_2$ | $Ca(OH)_2$ |
| | Permeation flux | | $m^3/m^2/d$ | 0.5 | 0.5 | 0.5 | 0.5 |
| | Permeation flow rate:concentrate flow rate | | - | 1:9 | 1:9 | 1:9 | 1:9 |
| | Nanofiltration membrane | Symbol | - | D | B | B | C |
| Composition of permeate | $Li^+/Ca^{2+}$ | | Molar ratio | 30 | 80 | 0.9 | 16 |
| | $Li^+/Na^+$ | | Molar ratio | - | - | - | - |
| | $OH^-/(SO_4^{2-}$ or $CO_3^{2-})$ | | Molar ratio | 100 | 90 | 3 | 2 |
| | $OH^-/Cl^-$ | | Molar ratio | - | - | - | - |
| | $Li^+$ recovery rate | | % | 70 | 10 | 90 | 90 |

From the above results, it can be seen that Inventive Examples 1 to 12, which are the method for recovering alkali metal ions and hydroxide ions according to the present invention, can recover lithium ions as alkali metal ions and hydroxide ions with higher purity and a higher recovery rate than Comparative Examples 1 to 3.

INDUSTRIAL APPLICABILITY

By using the recovery method and the recovery apparatus according to the present invention, for example, an aqueous solution containing lithium ions and hydroxide ions with high purity, which is suitable for producing the lithium hydroxide necessary for a positive electrode body precursor of a high nickel-based lithium ion battery that has been increasingly demanded in recent years, can be obtained at a high lithium ion recovery rate.

Although the present invention has been described in detail with reference to specific embodiments, it is apparent to those skilled in the art that various changes and modifications can be made without departing from the spirit and scope of the present invention.

The present application is based on Japanese Patent Application No. 2023-169364 filed on September 29, 2023, and the content thereof is incorporated herein by reference.

REFERENCE SIGNS LIST

1 water to be treated
2 raw water tank
3 nanofiltration membrane element
4 permeate tank
5 ultrafiltration membrane
6 dilution water
7 pump
8 anion exchange resin

**Claims**

1. A method for recovering alkali metal ions and hydroxide ions from water to be treated, wherein the method comprises a nanofiltration step of separating water to be treated using a nanofiltration membrane,

    the water to be treated comprises alkali metal ions and multivalent ions, has a pH of 10 or more, and has a hydroxide ion concentration (mol/L) lower than the sum of concentrations of the alkali metal ions (mol/L), and the nanofiltration membrane is such that a difference is 40% or more between a glucose removal rate when a 1,000 mg/L glucose aqueous solution having a temperature of 25°C and a pH of 6.5 is passed through the nanofiltration membrane at an operating pressure of 0.5 MPa and an isopropyl alcohol removal rate when a 1,000 mg/L isopropyl alcohol aqueous solution having a temperature of 25°C and a pH of 6.5 is passed through the nanofiltration membrane at an operating pressure of 0.5 MPa, the glucose removal rate is 70% or more, and a magnesium sulfate removal rate is 95% or more when a 2,000 mg/L magnesium sulfate aqueous solution having a temperature of 25°C and a pH of 6.5 is passed through the nanofiltration membrane at an operating pressure of 0.5 MPa.

2. The recovery method according to claim 1, wherein in the water to be treated, the sum of concentrations (mol/L) of alkali metal ions other than sodium ions and potassium ions is at least 1 time a chloride ion concentration (mol/L), and the sum of the concentrations (mol/L) of the alkali metals other than sodium ions and potassium ions is at least 1 time the sum of a sodium ion concentration (mol/L) and a potassium ion concentration (mol/L).

3. The recovery method according to claim 1 or 2, further comprising:

    a circulation step of mixing a concentrate obtained in the nanofiltration step with the water to be treated; and
    a step of controlling the pH of the water to be treated to 10 or more.

4. The recovery method according to claim 3, wherein the step of controlling the pH of the water to be treated to 10 or more comprises adding a hydroxide of a multivalent cation or an organic base to the water to be treated.

5. The recovery method according to claim 4, wherein the hydroxide of a multivalent cation is calcium hydroxide.

6. The recovery method according to claim 3, further comprising a step of adding dilution water to the water to be treated, wherein the dilution water is an aqueous solution having a pH of 10 or more and comprising a hydroxide of a multivalent cation or an organic base.

7. The recovery method according to claim 3, further comprising a step of passing the concentrate through an ultrafiltration membrane.

8. The recovery method according to claim 3, further comprising a step of bringing at least one of the water to be treated and the concentrate into contact with an anion exchange resin and mixing the at least one with the water to be treated.

9. The recovery method according to claim 1 or 2, wherein the nanofiltration membrane is such that a difference is 20% or less between the magnesium sulfate removal rate and a magnesium chloride removal rate when a 2,000 mg/L magnesium chloride aqueous solution having a temperature of 25°C and a pH of 6.5 is passed through the nanofiltration membrane at an operating pressure of 0.5 MPa, and the glucose removal rate is 70% or more and 90% or less.

10. The recovery method according to claim 1 or 2, wherein the alkali metal ions comprise at least one selected from the group consisting of lithium ions, rubidium ions, cesium ions, and francium ions.

11. An alkali metal hydroxide, which is recovered from a solution comprising alkali metal ions and hydroxide ions recovered by the recovery method according to claim 1 or 2.

12. A positive electrode material for a lithium ion battery, wherein the positive electrode material is synthesized using the alkali metal hydroxide according to claim 11, and the alkali metal hydroxide is lithium hydroxide.

13. An apparatus for recovering alkali metal ions and hydroxide ions from water to be treated,

wherein the apparatus comprises a nanofiltration unit configured to separate water to be treated using a nanofiltration membrane,
the water to be treated comprises alkali metal ions and multivalent ions, has a pH of 10 or more, and has a hydroxide ion concentration (mol/L) lower than the sum of concentrations (mol/L) of the alkali metal ions, and the nanofiltration membrane is such that a difference is 40% or more between a glucose removal rate when a 1,000 mg/L glucose aqueous solution having a temperature of 25°C and a pH of 6.5 is passed through the nanofiltration membrane at an operating pressure of 0.5 MPa and an isopropyl alcohol removal rate when a 1,000 mg/L isopropyl alcohol aqueous solution having a temperature of 25°C and a pH of 6.5 is passed through the nanofiltration membrane at an operating pressure of 0.5 MPa, the glucose removal rate is 70% or more, and a magnesium sulfate removal rate is 95% or more when a 2,000 mg/L magnesium sulfate aqueous solution having a temperature of 25°C and a pH of 6.5 is passed through the nanofiltration membrane at an operating pressure of 0.5 MPa.

14. The recovery apparatus according to claim 13, further comprising:

a circulation unit configured to mix a concentrate obtained by the nanofiltration unit with the water to be treated; and
a unit configured to pass the concentrate through an ultrafiltration membrane.

15. The recovery apparatus according to claim 13 or 14, further comprising a unit configured to bring at least one of the water to be treated and the concentrate obtained by the nanofiltration unit into contact with an anion exchange resin and mix the at least one with the water to be treated.

*FIG. 1*

*FIG. 2*

## INTERNATIONAL SEARCH REPORT

| International application No. |
| --- |
| **PCT/JP2024/034460** |

### A. CLASSIFICATION OF SUBJECT MATTER

***B01D 61/02***(2006.01)i; ***B01D 61/08***(2006.01)i; ***B01D 61/14***(2006.01)i; ***B01D 61/58***(2006.01)i; ***B01D 69/02***(2006.01)i;
***B01D 71/56***(2006.01)i; ***C01D 15/02***(2006.01)i; ***C02F 1/42***(2023.01)i; ***C02F 1/44***(2023.01)i; ***C22B 3/22***(2006.01)i
FI: B01D61/02 500; B01D61/08; B01D61/14 500; B01D61/58; B01D69/02; B01D71/56; C01D15/02; C02F1/42 E;
C02F1/44 Z; C22B3/22

According to International Patent Classification (IPC) or to both national classification and IPC

### B. FIELDS SEARCHED

Minimum documentation searched (classification system followed by classification symbols)

B01D61/02; B01D61/08; B01D61/14; B01D61/58; B01D69/02; B01D71/56; C01D15/02; C02F1/42; C02F1/44; C22B3/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2001-508925 A (PACIFIC LITHIUM LIMITED) 03 July 2001 (2001-07-03) claims, p. 7, lines 10-15, p. 14, line 16 to p. 20, line 4, fig. 2 | 1-15 |
| Y | WO 2013/146391 A1 (TORAY INDUSTRIES, INC.) 03 October 2013 (2013-10-03) claims, paragraphs [0020], [0043]-[0050], [0054]-[0055], fig. 1 | 1-15 |
| Y | HU, Ping et al. Modification of polyamide nanofiltration membrane with ultra-high multivalent cations rejections and mono-/divalent cation selectivity. Desalination. 2022, vol. 527, 115553, pp. 1-11 abstract, fig. 1, 6, 8, table 3, conclusion | 1-15 |
| Y | JP 2022-114566 A (NITTO DENKO CORPORATION) 08 August 2022 (2022-08-08) claims, paragraphs [0045], [0051], [0066], fig. 1-6 | 3-6 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **11 December 2024** | **24 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/034460**

| Patent document cited in search report | | | Publication date (day/month/year) | Patent family member(s) | | | Publication date (day/month/year) |
|---|---|---|---|---|---|---|---|
| JP | 2001-508925 | A | 03 July 2001 | WO | 1998/059385 | A1 | |
| | | | | claims, p. 2, lines 12-17, p. 12, line 2 to p. 17, line 15, fig. 2 | | | |
| | | | | EP | 1016152 | A1 | |
| | | | | AU | 8247198 | A | |
| WO | 2013/146391 | A1 | 03 October 2013 | AR | 090552 | A1 | |
| JP | 2022-114566 | A | 08 August 2022 | (Family: none) | | | |

Form PCT/ISA/210 (patent family annex) (July 2022)

**REFERENCES CITED IN THE DESCRIPTION**

**Patent documents cited in the description**

- JP 2001508925 A

- JP 2023169364 A

**Non-patent literature cited in the description**

- Outline of lithium production technology - current and future trends. **OKUBO**. Metal Resource Report. Japan Organization for Metals and Energy Security, 2019, vol. 48

- **SCHMUCH R** ; **WAGNER R** ; **HOERPEL G** ; **PLACKE T** ; **WINTER M**. Performance and cost of materials for lithium-based rechargeable automotive batteries. *Nat Energy.*, 2018, vol. 3 (4), 270